# EUROPÄISCHE PATENTANMELDUNG

(11) **EP 3 799 296 A1**
(43) Veröffentlichungstag der Anmeldung: **31.03.2021**
(21) Anmeldenummer: 19200076.8
(22) Anmeldetag: 27.09.2019
(51) Int. Cl.: H02P 29/60, H02P 27/08

(54) **ELEKTRISCHER ANTRIEB MIT SCHALTFREQUENZGEREGELTER MOTORTEMPERATUR**

(71) Anmelder: Siemens Aktiengesellschaft, 80333 München (DE)
(72) Erfinder: Weis, Benno, 91334 Hemhofen (DE)

(57) **Zusammenfassung**

Die Erfindung betrifft ein Verfahren zur Steuerung eines elektrischen Antriebs (1), wobei der elektrische Antrieb (1) einen Stromrichter (2) und einen Motor (3) aufweist, wobei der Stromrichter (2) mit einer Pulsweitenmodulation betrieben wird. Zur Verbesserung des elektrischen Antriebs (1) insbesondere im Hinblick auf einen Schutz vor Überhitzung wird vorgeschlagen, dass die Schaltfrequenz (fₛ) der Pulsweitenmodulation erhöht wird, wenn eine Temperatur des Motors (3) einen Grenzwert überschreitet. Ferner betrifft die Erfindung einen elektrischen Antrieb (1) aufweisend einen Stromrichter (2), einen Motor (3) und eine Regelvorrichtung, eingerichtet zur Ausführung eines derartigen Verfahrens.

## Beschreibung

Die Erfindung betrifft ein Verfahren zur Steuerung eines elektrischen Antriebs, wobei der elektrische Antrieb einen Stromrichter und einen Motor aufweist, wobei der Stromrichter mit einer Pulsweitenmodulation betrieben wird. Weiter betrifft die Erfindung einen elektrischen Antrieb aufweisend einen Stromrichter, einen Motor und eine Regelvorrichtung, eingerichtet zur Ausführung eines derartigen Verfahrens.

Bei einem elektrischen Antrieb wird oftmals ein Elektromotor, im Folgenden auch als Motor bezeichnet, mittels eines Stromrichters mit elektrischer Energie versorgt. Dabei ist es möglich, den Motor mittels des Stromrichters, insbesondere hinsichtlich seiner Drehzahl oder seines Drehmomentes, zu steuern oder zu regeln. Dabei wird der Stromrichter zumeist pulsweitenmoduliert betrieben. Das bedeutet, dass zur Bereitstellung einer Spannung an den Klemmen des Motors, Halbleiter des Stromrichters mit einer Schaltfrequenz schalten, die mindestens so groß ist wie die Frequenz der Spannung an den Klemmen des Motors. Meistens liegt die Schaltfrequenz deutlich höher als die für die Versorgung des Motors erforderliche Frequenz, um damit einen möglichst verzerrungsarmen Spannungsverlauf (Sinusverlauf) erzeugen zu können.

Elektromotoren verursachen im Vergleich zu einem direkten und damit drehzahlstarren Anschluss an das Energieversorgungsnetz erhöhte Verluste, wenn sie an einem Frequenzumrichter, auch als Stromrichter bezeichnet, betrieben werden. Ursache der höheren Verluste sind unter anderem schaltfrequente Rippleströme. Aufgrund der höheren Verluste kann der Motor schlechter ausgenutzt werden. Wird er zu heiß, beispielsweise aufgrund einer erhöhten Umgebungstemperatur, muss die Leistung des Motors reduziert werden, um eine Überhitzung und damit einhergehende Beschädigung oder gar Zerstörung zu vermeiden.

Dazu wird bei Überschreiten eines Temperaturgrenzwertes beim Motor die Leistung des Motors reduziert.

Um einen Betrieb unter allen Randbedingungen zu gewährleisten, kann der Motor und/oder auch der ganze Antrieb überdimensioniert werden, so dass er auch unter worst-case Bedingungen noch volle mechanische Leistung erbringen kann.

Der Erfindung liegt die Aufgabe zugrunde, einen elektrischen Antrieb insbesondere im Hinblick auf einen Schutz vor Überhitzung zu verbessern.

Diese Aufgabe wird durch ein Verfahren zur Steuerung eines elektrischen Antriebs gelöst, wobei der elektrische Antrieb einen Stromrichter und einen Motor aufweist, wobei der Stromrichter mit einer Pulsweitenmodulation betrieben wird, wobei die Schaltfrequenz der Pulsweitenmodulation erhöht wird, wenn eine Temperatur des Motors einen Grenzwert überschreitet. Ferner wird diese Aufgabe durch einen elektrischen Antrieb aufweisend einen Stromrichter, einen Motor und eine Regelvorrichtung, eingerichtet zur Ausführung eines derartigen Verfahrens, gelöst.

Weitere vorteilhafte Ausgestaltungen der Erfindung sind in den abhängigen Ansprüchen angegeben.

Der Erfindung liegt die Erkenntnis zugrunde, dass sich ein elektrischer Antrieb mit einem Motor, der über einen Stromrichter mittels einer Pulsweitenmodulation mit Energie gespeist wird, dadurch verbessern lässt, dass mit erhöhter Motortemperatur die Schaltfrequenz der Pulsweitenmodulation erhöht wird. Bei der Motortemperatur kann es sich um eine Temperatur in der Wicklung, vorzugsweise einer Statorwicklung, des Motors, insbesondere im Wickelkopf, handeln, die mittels eines Temperatursensors gemessen oder mit Hilfe eines Temperaturmodells beispielsweise aus den Motorströmen ermittelt wird.

Wird nun ein vorgegebener Grenzwert für die Motortemperatur überschritten, so wird die Schaltfrequenz der Pulsweitenmodulation erhöht. Das bewirkt, dass sich die Oberschwingungen der Motorströmen hin zu höheren Frequenzen verschieben. Durch das induktive Verhalten des Motors erhöht sich damit auch die Impedanz mit zunehmender Frequenz für diese Oberschwingungen der Motorströme, so dass die unerwünschten Verzerrungsströme, die ebenfalls zur Erwärmung des Motors beitragen, reduziert werden. Dadurch kann die Erwärmung des Motors gestoppt oder sogar verringert werden. Eine Überhitzung des Motors und eine damit einhergehende Beschädigung wird zuverlässig vermieden. Die Motortemperatur kann damit auf zulässige Werte reduziert werden.

Die erhöhte Schaltfrequenz des Stromrichters entlastet den Motor, führt aber zu erhöhten Verlusten im Stromrichter. In vielen Anwendungsfällen ist dies jedoch akzeptabel, da sich der Stromrichter in einem gekühlten oder sogar klimatisierten Schaltschrank befindet, während sich der Motor an einem Ort befinden kann, an dem die Umgebungstemperatur sehr hoch ist. Um unnötig hohe Stromrichterverluste zu vermeiden, wird die Schaltfrequenz des Stromrichters nur dann erhöht, wenn die Motortemperatur eine vorgegebene Schwelle überschreitet. Liegt sie darunter, wird die Schaltfrequenz nicht erhöht. Es erfolgt dann ein Betrieb mit nominaler Schaltfrequenz.

Für minimale Stromrichterverluste wird die Schaltfrequenz in einem ersten Schritt geringfügig erhöht, beispielsweise von 4kHz im Nominalbetrieb auf 6kHz. Steigt die Motortemperatur weiter an bzw. sinkt sie nicht ab, so erfolgt eine weitere Erhöhung auf beispielsweise 8kHz. Die Erhöhung erfolgt solange, bis entweder die Motortemperatur sinkt oder die maximal zulässige Schaltfrequenz des Stromrichters erreicht wird. Mit diesem Verfahren wird erreicht, dass die Schaltfrequenz nur soweit erhöht wird, wie es zur Vermeidung der Überhitzung des Motors erforderlich ist.

Das vorgeschlagene Verfahren kann entweder in Software implementiert werden oder aber in der Hardware des Steuersatzes, beispielsweise in einem FPGA integriert werden.

Das Verfahren hat darüber hinaus den Vorteil, dass damit der Betriebsbereich von stromrichtergespeisten Antrieben bei minimalen Verlusten erweitert werden kann. Damit kann ein besonders kostengünstiger Antrieb mit niedrigen Betriebskosten bereitgestellt werden. Ebenso können Überdimensionierungen vermieden werden, welche die Kosten für einen Antrieb in die Höhe treiben.

Bei einer vorteilhaften Ausgestaltung der Erfindung wird die Schaltfrequenz so lange erhöht bis die Temperatur des Motors sinkt. Für den Fall, dass bei einer Erhöhung der Schaltfrequenz keine Verringerung der Motortemperatur erzielt wird, kann sofort oder nach Ablauf eines vorbestimmten Zeitintervalls die Schaltfrequenz weiter erhöht werden. Alternativ ist es möglich, die Schaltfrequenz kontinuierlich zu erhöhen, bis der Grenzwert zur Auslösung der Schaltfrequenzerhöhung wieder unterschritten wird. Damit kann eine schnelle Reaktion auf eine erhöhte Motortemperatur realisiert werden.

Bei einer weiteren vorteilhaften Ausgestaltung der Erfindung wird die Schaltfrequenz sprungförmig erhöht. Es hat sich als vorteilhaft erwiesen, wenn die Schaltfrequenz des Stromrichters nur bestimmte Werte annimmt. Zwischen diesen Werten, wie beispielsweise 4kHz, 6kHz und 8kHz kann dann gesprungen werden. Die Gesamtauslegung, insbesondere im Hinblick auf Störströme und/oder Filter muss dann nur auf diese wenigen verwendeten Schaltfrequenzen erfolgen. Damit bleibt der elektrische Antrieb einfach beherrschbar, da er nur wenige unterschiedliche Betriebszustände annimmt. Das Anregen von Resonanzen wird damit äußerst unwahrscheinlich, da diese im Vorfeld für die verwendeten Schaltfrequenzen überprüft werden können. Gleichzeitig kann auch mit wenigen unterschiedlichen Schaltfrequenzen der Effekt des Motorschutzes vor zu hohen Temperaturen auf einfache Weise zuverlässig durchgeführt werden.

Bei einer weiteren vorteilhaften Ausgestaltung der Erfindung ist die Kühlleistung des Stromrichters veränderbar ausgestaltet. Da die geringeren Verluste im Motor mit erhöhten Verlusten im Stromrichter einhergehen, ist es vorteilhaft, wenn die Kühlleistung des Stromrichters veränderbar ist. Dies stellt oftmals kein Problem dar, da der Aufstellort des Stromrichters im Gegensatz zu dem der Motoren meist frei gewählt werden kann. Meistens befindet er sich innerhalb eines Gebäudes, so dass es auch zu keiner Geräuschentwicklung in der Umgebung kommt, wenn die Kühlleistung zumindest zeitweise zur Schaltfrequenzerhöhung erhöht wird. Darüber hinaus kann auch eine Klimatisierung der Schaltschränke, die den Stromrichter aufweisen, in Frage kommen, um zumindest kurzfristig eine Erhöhung der Schaltfrequenz zuzulassen.

Im Folgenden wird die Erfindung anhand der in den Figuren dargestellten Ausführungsbeispiele näher beschrieben und erläutert. Es zeigen:
- FIG 1: die Komponenten eines elektrischen Antriebs und
- FIG 2: eine Übersicht über die Verluste eines elektrischen Antriebs.

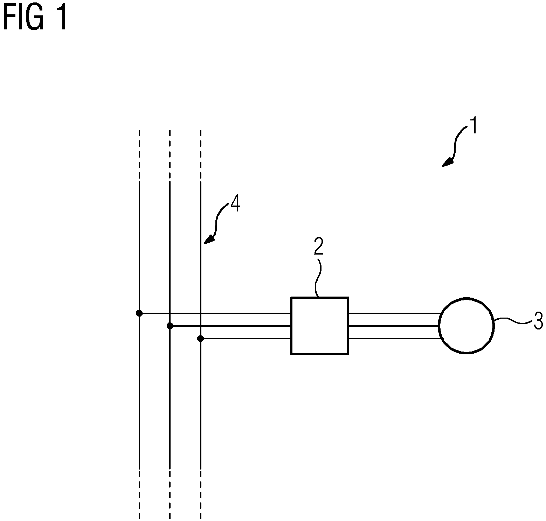

Die FIG 1 zeigt einen elektrischen Antrieb 1. Ein Stromrichter 2 entnimmt einem Energieversorgungsnetz 4 Energie und speist damit einen Motor 3.

Dabei kann der Stromrichter 2 den Motor 3 steuern und/oder regeln, so dass er Sollwerte wie beispielsweise eine vorbestimmte Leistung, eine vorbestimmte Drehzahl oder ein vorbestimmtes Moment annimmt. Dies wird mit Hilfe von Halbleitern im Stromrichter 2 erreicht, die den Strom durch den Stromrichter 2 schalten. Die Halbleiter schalten dabei mit einer Schaltfrequent fₛ, um eine pulsweitenmoduliertes Ausgangsspannung an den Anschlussklemmen des Motors zu erzeugen.

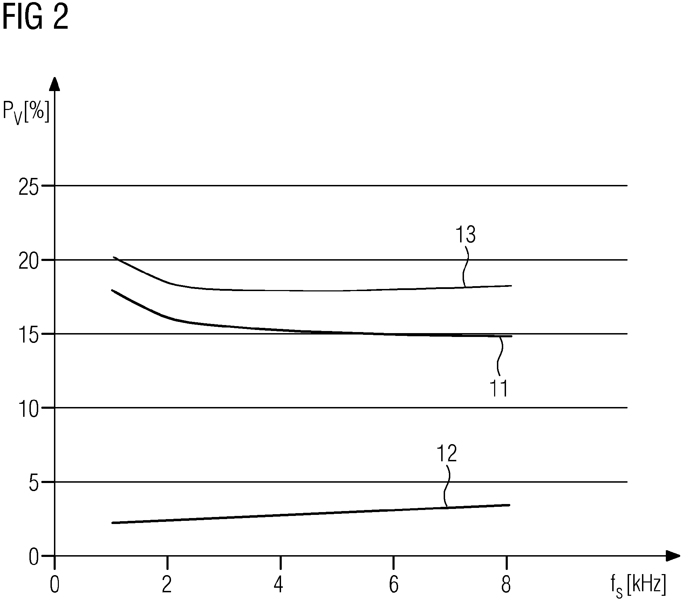

Die FIG 2 zeigt die Verlustleistung P_{V} von Stromrichter 2 und Motor 3, sowie des elektrischen Antriebs 1. Die Verlustleistung 12 des Stromrichters 2 ist am geringsten und steigt mit steigender Schaltfrequenz fₛ. Die Verlustleistung 11 des Motors 3 ist deutlich höher, fällt hingegen mit steigender Schaltfrequenz fₛ ab. Die Gesamtverluste 13 des elektrischen sind über die Schaltfrequenz fₛ in erster Näherung konstant. Überschreitet nun die Temperatur des Motors 3 einen festgelegten Grenzwert, so wird die Schaltfrequenz fₛ erhöht. Dadurch reduziert sich die Verlustleistung 11 im Motor 3 und die Temperatur im Motor 2 sinkt. Die höheren Verluste im Stromrichter 2 können dabei toleriert werden. Gegebenenfalls können sie durch eine verstärkte Kühlleistung ausgeglichen werden. Eine zumindest temporär vorhandene Geräuschbelästigung durch einen größeren Luftstrom und/oder einer höhere Lüftergeschwindigkeit kann dabei toleriert werden.

Zusammenfassend betrifft die Erfindung ein Verfahren zur Steuerung eines elektrischen Antriebs, wobei der elektrische Antrieb einen Stromrichter und einen Motor aufweist, wobei der Stromrichter mit einer Pulsweitenmodulation betrieben wird. Zur Verbesserung des elektrischen Antriebs insbesondere im Hinblick auf einen Schutz vor Überhitzung wird vorgeschlagen, dass die Schaltfrequenz der Pulsweitenmodulation erhöht wird, wenn eine Temperatur des Motors einen Grenzwert überschreitet. Ferner betrifft die Erfindung einen elektrischen Antrieb aufweisend einen Stromrichter, einen Motor und eine Regelvorrichtung, eingerichtet zur Ausführung eines derartigen Verfahrens.

## Patentansprüche

1. Verfahren zur Steuerung eines elektrischen Antriebs (1), wobei der elektrische Antrieb (1) einen Stromrichter (2) und einen Motor (3) aufweist, wobei der Stromrichter (2) mit einer Pulsweitenmodulation betrieben wird, wobei die Schaltfrequenz (fₛ) der Pulsweitenmodulation erhöht wird, wenn eine Temperatur des Motors (3) einen Grenzwert überschreitet.

2. Verfahren nach Anspruch 1, wobei die Schaltfrequenz (fₛ) so lange erhöht wird, bis die Temperatur des Motors sinkt.

3. Verfahren nach einem der Ansprüche 1 oder 2, wobei die Schaltfrequenz (fₛ) sprungförmig erhöht wird.

4. Elektrischer Antrieb (1) aufweisend
- einen Stromrichter (2),
- einen Motor (3) und
- eine Regelvorrichtung, eingerichtet zur Ausführung eines Verfahrens nach einem der Ansprüche 1 bis 3.

5. Elektrischer Antrieb (1), wobei die Kühlleistung des Stromrichters (2) veränderbar ausgestaltet ist.
